# EUROPEAN PATENT SPECIFICATION

(11) **EP 3 034 687 B1**
(45) Date of publication and mention of the grant of the patent: **24.10.2018**
(21) Application number: 15186580.5
(22) Date of filing: 23.09.2015
(51) Int. Cl.: D06N 3/00, D06N 3/08, B32B 3/26, B32B 5/02, B32B 5/08, B32B 5/26, B32B 37/24, B32B 38/04

(54) **LAYERED FLEXIBLE MATERIAL FOR BREATHABILITY INCREASE AND MOISTURE CONTROL**
FLEXIBLES SCHICHTMATERIAL MIT ERHÖHTER ATMUNGSAKTIVITÄT UND FEUCHTIGKEITSREGELUNGSEIGENSCHAFTEN
MATERIAU FLEXIBLE MULTICOUCHE AVEC UNE RESPIRABILITE AUGMENTEE ET REGULATION DE L'HUMIDITE

(30) Priority: 23.09.2014 PT 2014107901
(43) Date of publication of application: 22.06.2016
(73) Proprietor: TMG - Tecidos Plastificados e Outros Revestimentos Para a Indústria Automóvel, SA, 4770-583 Säo Cosme Vale (PT); CENTITVC - Centro de Nanotecnologia e Materiais Técnicos, Funcionais e Inteligentes, 4760-034 Vila Nova de Famalião (PT)
(72) Inventor: MARTINS MACHADO, Carina Madalena, 4795-107 Aves (PT); E BRANQUINHO DE PAIS MONTEIRO, Joana Da Fonseca, 3520-058 Nelas (PT); DA SILVA SAMPAIO E PORTELA, Ana Rute, 4758-588 Trofa (PT); SILVESTRE MENDES PINTO DE MOURA, Bruna Gabriela, 4760-292 Vila Nova De Famalicão (PT); CORREIA SANTOS, Carla Alexandra, 4425-656 Maia - Pedrouços (PT); SIMÕES DE CARVALHO, Anabela, 4760-686 Vila Nova De Famalicão (PT); PINHO, Elizabete, 40501-300 Porto (PT); RODRIGUES ÁGUIA, António César, 4410-104 São Felix Da Marinha Vila Nova de Gaia (PT)
(74) Representative: Teixeira de Carvalho, Anabela

(56) References cited:
- EP-A1- 2 650 123
- WO-A1-00/05448
- WO-A1-2006/047130
- WO-A2-00/04936
- WO-A2-2013/037767

## Description

### Technical field

The present disclosure describes a layered flexible material for coatings that allows improving the comfort of artificial leather materials, namely upholsteries, by increasing breathability and moisture management of its surfaces.

The present disclosure is particularly relevant in the automotive sector, namely for automotive upholstery coating.

### Background

There is a growing concern of the artificial leather producers for new functionalities, properties and customized design incorporation, aiming to increase value to the final product and fulfil their client's needs. This fact necessarily leads to the development and use of innovative materials in the field of multi-layered systems with daring characteristics. There is no doubt that current producer's main focus is on the automotive interior comfort improvement. Bearing that in mind, the search for the obtention of comfort in upholsteries and other areas of users' direct contact with the materials of an automotive has been increasing significantly.

The comfort perception in upholstery and in areas which are in direct contact with the user, generically depends on three factors concerning the quality of the surfaces in contact with the human body: - surface temperature; - ability to permeate vapour perspiration through convection (breathability); - ability to permeate liquid perspiration through absorption and diffusion (moisture management). The use of infrared radiation reflective pigments and phase change materials are the most common approach to improve surfaces thermal comfort. Breathability has been addressed by using intrinsically porous materials such as Alcantara® or textiles, as well as natural or artificial perforated leather. When perspiration leaves the human body in the vapour or liquid phase, it will get in contact with the material surface, where depending on its permeation capacity by convection or diffusion, it will pass through it or will be retained in part at its surface. The material ability to manage moisture will allow liquid perspiration to be absorbed and diffused through its thickness. Another important factor is the liquid-state perspiration diffusion through clothing to the material surface. The faster this moisture management process, the more comfortable the material will be. The moisture management phenomenon is neglected even during the production of materials with breathability, as for instance Alcantara®, which presents a good permeation by convection through it porous structure, but a low permeation by absorption and diffusion, thus not avoiding perspiration to accumulate in the interface between the upholstery and the human body. These phenomena well show the importance of determining the moisture management and breathability capacity in the complete evaluation of comfort of the materials used in automotive upholsteries.

The evaluation of these two properties in a material requires the determination of the liquid water permeation resistance (moisture management) and water vapour permeability (breathability). The first refers to the material capacity to absorb liquid water and diffusing it over its thickness for further evaporation. The second determines the material capacity to allow water vapour passing through natural convection over its thickness.

Currently there are some artificial leather coatings commercially available constituted by multilayers with breathability, fire resistance and waterproof characteristics, with application in automotive upholsteries. EP2650123 document "Breathable artificial leather" presents one of multilayer systems comprising a breathable layer constituted by a laminated exterior fabric with a waterproof and breathable membrane, and the backing is coated with a PVC, TPO or PU based resin layer. However, said system presents limitations since the material it refers to is waterproof, which in case of accumulation of perspiration at the surface, will accumulate at the top of the coating.

The document US 8486209 "Method for the production of a breathable multilayer synthetic leather, and breathable multilayer synthetic leather" presents a method for producing a breathable multilayer polyurethane based artificial leather. It is constituted by a textile support layer, at least one intermediate layer of an open-cell foam and an external layer of polyurethane also. This system considers having a production method without additional steps and that its pores are so small that do not impair the material final appearance. The material, given its small porous structure presents breathable ability but no moisture management/control. Additionally, this material presents a low abrasion resistance, a requirement that is essential for high wear applications such as the sitting area of an automotive upholstery.

The document US 20120175556-A1 "Open-Cell Foams Having Superabsorbers" discloses a sheet coating with superabsorbent characteristics, composed of open-cell foam containing superabsorbent in the form of sheet-materials, that in its total do not present a thickness more than 30 mm. Additionally it refers to processes for their production, and also their use for moisture regulation in continued healthcare systems. These systems are aimed at being applied in seat cushions or mattresses containing said sheet materials or composites, in order to improve the user's comfort, since this material aims to regulate the atmospheric moisture to a pleasant degree and to avoid the excessive perspiration. Simultaneously, these compounds are capable of releasing again the embedded humidity in a controlled way, in non-use phases, and regenerate rapidly. Despite this invention reported properties, concerning the relative moisture regulation in a specific environment, this type of control is for specific cases and in a controlled environment, namely in medical applications or quality maintenance in continued healthcare system processes.

These documents illustrate the technical problem to be solved by the present invention.

None of the previously described references represents a material for automotive upholstery coating, for example artificial leather, which guarantees the natural leather aspect aesthetic side, wear resistance, breathability of the material and also moisture management/control. The present disclosure describes a material that responds to these needs.

### General description

In automotive upholstery applications, namely artificial leather, it is necessary to reach a compromise between the need for perspiration absorption during use and the limitation to the rapid absorption counter-productive in the case of washing the upholstery surface with water.

Thus, the present invention describes a layered flexible material for coatings, namely artificial leather upholstery, comprising:
at least a water permeable lacquer external layer, comprising polymers comprising one of the following functional groups: hydroxyl, amine, carboxylic, carbonyl, ester, sulfonic, amide, acrylate or combinations thereof;
a polyvinyl chloride - PVC perforated intermediate layer;
an absorbent textile layer comprising a plurality of superabsorbent polymer fibres and a plurality of polyester fibres.
wherein said layers are bound and present water diffusing characteristics, working in a synergetic way for the moisture management, preventing rapid water absorption by the absorbent textile layer, increasing the product durability and showing a higher moisture control without reducing material's breathability.

Despite the fact that the superabsorbent materials present moisture management ability, they do not present satisfactory properties in terms of dimensional stability when they absorb perspiration. The present invention aims at fulfilling this gap by combining an absorbent textile layer with a PVC perforated intermediate layer and a permeable external layer of lacquers. Additionally, the use of a common artificial leather industry polymer, PVC, allows maintaining its appearance while keeping the demands regarding wear resistance and the aging resistance at adverse environmental conditions (solar exposure and extreme temperature conditions).

The present invention describes a multilayer flexible material of artificial leather-type for use in upholsteries, particularly for automotive upholsteries through a cutting and sewing process, capable of guaranteeing the automotive user comfort due to its perspiration permeation capacity, respecting the quality requirements required by this industry, maintaining the regular aspect of artificial leather and allowing, if necessary, a customized design tailored to the requirements of the automotive market.

The present disclosure refers to a material for eliminating user perspiration, comprising at least three layers, wherein the layer in contact with the user contains a water permeable lacquer on a polyvinyl chloride perforated intermediate layer, being these layers on a reverse side absorbent textile layer, which can contain absorbent materials in its structure, wherein the three layers work in a synergetic way in respect to the moisture management and breathability. The flexible material for automotive upholstery coating can further contain a textile support layer to confer the mechanical properties needed to their final application.

In an embodiment, the absorbent textile layer of the flexible material for coatings described in this disclosure can further comprise a plurality of polypropylene fibres.

In an embodiment, the polymers of the lacquer external layer can be ionic.

In an embodiment, the polymers of the external lacquer layer are aliphatic or aromatic, being achieved better results when aliphatic polymers are used, in particular polyurethanes.

In an embodiment, for the achievement of better results the absorbent textile layer of the described material for coating can comprise:
15 - 80% w/w of polyester fibres, preferably 30 - 70% w/w
20 - 85% w/w of superabsorbent fibres, preferably 30 - 70% w/w.

In an embodiment, for the achievement of better results the absorbent textile layer of the material for coating can comprise:
10 - 40% w/w of polyester fibres, preferably 10 - 30% w/w;
20 - 85% w/w of superabsorbent fibres, preferably 30 - 70% w/w;
5-40% w/w of polypropylene fibres, preferably 5 - 10% w/w of polypropylene fibres.

In an embodiment, for better results, the disclosed material can additionally comprise at least one additional support layer, preferably a textile support, connected to the absorbent textile layer, that is, at the reverse side.

In an embodiment, for better results the absorbent textile layer (3) is a layer: of fabric, of nonwoven fabric, of technical textile, of knitted fabric or combinations thereof.

In an embodiment, for better results the polyester fibres of the absorbent layer can be of polyethylene terephthalate.

In an embodiment, for better results, the PVC intermediate layer (2) perforation can be: from the lacquer external layer (1) towards the absorbent layer (3); or from the absorbent layer (3) towards the lacquer external layer (1); or combinations thereof.

In an embodiment, for better results, the distribution of the holes is substantially uniform, and there can be a higher prevalence of holes in the critical perspiration areas.

In an embodiment, for better results, the holes distribution varies between 2 holes/cm² - 100 holes/cm2, preferably between 10 -60 holes/cm2 and more preferentially 20 - 30 holes/cm2.

In an embodiment, for better results, the holes size of the PVC intermediate layer or of several layers, can vary between 10 nm - 1 mm. The smaller or greater dimension of the holes and their surface concentration will allow a higher or lower water diffusion rate across the material layers. The dimensions of the holes can be calculated by several conventional methods, namely optical e/or electronic microscopy, or scanning electron Microscope (SEM).

In an embodiment, for better results, the absorbent textile layer can additionally comprise fibres selected from the following list: polyethylene, polyamide, PLA, PHA, PHB, cotton, wool, silk, viscose, Tencel®, regenerated cellulose or combinations thereof, among others.

In an embodiment, for better results, the superabsorbent fibres of the absorbent textile layer can be selected from a list constituted by: polyacrylic acid, polyacrylamide and polyvinyl alcohol (PVA), polyacrylate/polyacrylonitrile copolymers, polyacrylamide and/or ethylene maleic anhydride, crosslinked carboxymethylcellulose, crosslinked hydroxyethylcellulose, PVA copolymers, crosslinked polyethylene oxide, crosslinked or graft starch, polyacrylonitrile copolymers, among others.

In an embodiment, for better results the PVC intermediate layer can comprise a plurality of sublayers, particularly 2, 3, 4.

In an embodiment, for better results the PVC based intermediate layer can additionally comprise plasticizers, stabilizers, one pigments, and/or other additives.

In an embodiment, for better results the PVC intermediate layer can be a compact structure and/or foam structure.

In an embodiment, for better results the thickness of the PVC intermediate layer (2) varies between 0.5 - 1.5 mm.

Another aspect of the present disclosure refers to upholsteries, namely in artificial leather, particularly upholsteries for automotives comprising the material described in the present disclosure.

Another aspect of the present disclosure refers to a method for the material preparation described in the previous claims, comprising the following steps:
forming a PVC layer over a paper support by knife coating;
applying the absorbent fabric layer described in the previous claims, over the fluid PVC layer;
gelling the PVC layer;
lacquering the material obtained in the previous step with one permeable lacquer layer according to that described in the present disclosure; perforating the material in order to allow permeabilizing the PVC layer.

In an embodiment, for better results, the perforation of the PVC intermediate layer can be performed before or after the lacquering perforating in this case the external lacquer layer.

In an embodiment, for better results, the interconnection between the three layers can be achieved by pressure application (between 0.5 and 20 bar) in this set or by applying pressure (between 0.5 and 20 bar) between the PVC intermediate layer and the absorbent textile layer, followed by the lacquer layer application.

In an embodiment, the material can be manufactured by lamination of the absorbent textile layer on the pre-gelified polyvinyl chloride, followed by gelification and perforation of the polyvinyl chloride or perforation of the entire set.

In an embodiment, the interconnection between the layers 1 to 3 is achieved by pressure application (between 0.5 and 20 bar) between the layers 2 and 3 followed by application of layer 1.

In an embodiment, the material can be produced by lamination of the absorbent textile layer (particularly an absorbent nonwoven fabric layer) on the pre-gelified polyvinyl chloride, which is subject to pressing during the lamination of the nonwoven fabric on the PVC plastisol, in order to expose the fibres of the absorbent nonwoven fabric layer to the material surface.

In an embodiment, the material to be manufactured can be subject to a posterior needling process, in order to increase the fibres of the absorbent textile layer exposure (in particular the absorbent nonwoven fabric layer) to the PVC surface.

In an embodiment, the material to be manufactured can be subject to a posterior needling process, in order to perforate the PVC superior layer and expose to the surface the fibres of the absorbent textile layer (particularly the absorbent nonwoven fabric layer).

In an embodiment, the material to be produced can be subject to a posterior lacquering process by knife-coating or rotogravure, using lacquers with water permeation properties in order to guarantee the contact of the absorbent textile layer (particularly the absorbent nonwoven fabric layer) placed at the surface.

In an embodiment, the material to be produced can be subject to a posterior lacquering process by knife-coating or rotogravure, using lacquers with water permeation properties, followed by perforation by needling of all the layers, thus allowing the vapour convection channels formation and increasing moisture control/management.

Throughout the description and claims the word "comprises" and variations of the word do not intent to exclude other technical features, like other components or steps. Additional objects, advantages and invention features will become apparent to those skilled in the art upon examination of the description or may be learned by practice of the invention. The following embodiments and drawings are for illustrating and should not be seen as limiting the scope of the disclosure. Additionally, the present disclosure includes all the possible combinations of particular or preferred embodiments herein described.

### Brief description of the drawings

The following figures provide embodiments for illustrating the disclosure.

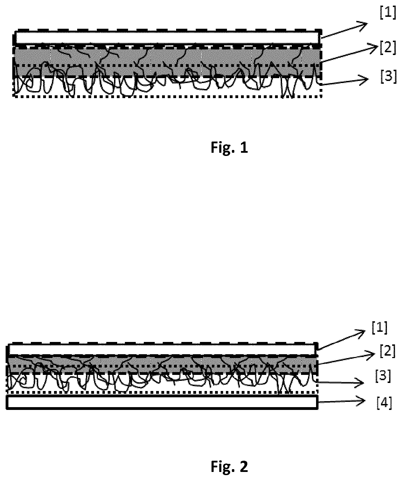

Figure 1: An embodiment of the material with moisture management and breathability properties of the present disclosure, constituted by at least three layers wherein:
   1 represents a lacquer layer or layers with capacity to permeate water in the liquid state by absorption and diffusion, or in the vapour state by natural convection;
   2 represents a layer or layers of perforated polyvinyl chloride (PVC);
   3 represents a layer or layers of nonwoven fabric support with capacity of absorption and diffusion or water transport.
Figure 2: Embodiment of the material with moisture management and breathability properties of the present invention, constituted by at least four layers wherein:
   1 represents a lacquer layer or layers [1] with capacity to permeate water in the liquid state by absorption and diffusion, or in the vapour state by natural convection;
   2 represents a layer or layers of perforated polyvinyl chloride (PVC);
   3 represents a layer or layers of nonwoven fabric support with capacity of absorption and diffusion or water transport.
   4 represents one or more support layers, namely textile.

### Detailed description

The present disclosure refers to a material for user perspiration elimination comprising at least three layers, wherein the layer in contact with the user contains a water permeable lacquer, which is on a polyvinyl chloride perforated intermediate layer, these being on a reverse side absorbent textile layer, which can contain absorbent materials in its structure, wherein the three layers work in a synergetic way concerning moisture management and breathability. The flexible material for automotive upholsteries coating can additionally contain a textile support layer in order to give mechanical properties needed to its final application.

The present disclosure refers to a layered flexible material for coatings, namely artificial leather upholsteries, comprising:
at least a water permeable lacquer external layer, comprising polymers comprising one of the following functional groups: hydroxyl, amine, carboxylic, carbonyl, ester, sulphonyl, amide, acrylate, or combinations thereof;
a polyvinyl chloride perforated intermediate layer - PVC;
an absorbent textile layer comprising a plurality of superabsorbent polymer fibres and a plurality of polyester fibres;
wherein said layers are bound and present water diffusing characteristics working synergistically in moisture control without reducing material breathability.

The present disclosure describes a layered flexible material for coatings, namely artificial leather upholsteries, comprising:
at least a water permeable lacquer external layer, comprising one of the following functional groups: hydroxyl, amine, carboxylic, carbonyl, ester, sulfonic, amide, acrylate or combinations thereof;
a polyvinyl chloride perforated intermediate layer - PVC;
an absorbent textile layer comprising a plurality of superabsorbent polymer fibres and a plurality of polyester fibres;
wherein said layers are bound and present diffusing and water absorption characteristics working synergistically in liquid state moisture control through a mass transport phenomenon by diffusion (moisture management) without reducing material normal breathability achieved by mass transport phenomenon by convection. Due to the layers' interconnection and its optimized absorption and diffusion properties, they are able to remove perspiration from the surface when in contact with the user, and release it again when the user no longer contacts the surface, due to the corresponding concentration differential between coating front and reserve side, in both situations. The correct adjustment of the diffusion and absorption properties allows optimising the comfort avoiding that in upholsteries washing situations in water, the water does not rapidly saturate the material and the upholsteries interior.

In an embodiment, the PVC layer conjugated with the nonwoven fabric of the absorbent textile layer and the layers below this one can be applied by lamination or knife-coating, followed by thermal gelification. This layer allows guaranteeing materials mechanical resistance, elasticity, appearance and price, partially impossible to have with nonwoven fabric only, as well as protecting the nonwoven fabric layer from chemical agents harmful to its structure, without reducing its intrinsic properties. On the other side, the presence of PVC layer or layers guarantees the use of a noble raw-material in terms of natural leather imitation.

In an embodiment, the superabsorbent fibres of the absorbent textile layer are of polymeric based with capacity of absorbing water in its structure, forming a gel, without dissolution. Since the type of interactions occurring between the superabsorbent material and the liquid phase are non-covalent type, this structure retention is reversible. This retention and release capacity allows for an efficient moisture management of the absorbent textile layer, in particular if this layer is a nonwoven fabric. The incorporation of these materials in artificial leather upholstery coatings allows the increase of its moisture management and breathability properties, as well as increasing the user comfort, maintaining the quality of these materials namely the wear resistance and aging characteristics required in the automotive sector).

In an embodiment, the surface lacquers layer with capacity to permeate water further allow an additional protection of the PVC intermediate layer and of the absorbent textile layer from chemical agents and mechanical wear.

### Example 1 - Preparation of an artificial leather material with moisture management properties.

### Step 1: Preparation of a PVC formulation for artificial leather materials

- In an embodiment, the artificial leather material described in the present disclosure contains PVC, and its structure is based on Figure 2.
- For the PVC paste formulation which originates the PVC intermediate layer of figure 2, emulsion and micro-suspension PVCs, plasticizers, pigments to give colour to the article and other additives were used.
- The formulation preparation was performed with the mixture of the components, added with a given dosage, in a Cowles stirrer.
- The PVC layer can be formed by several sublayers of equal or different composition, of compact or foam structure. For the foam structure, the composition can contain an expansion agent.

### Step 2: Combination of the PVC layer with a nonwoven fabric with moisture management properties (layer 3)

- The nonwoven fabric in this embodiment is constituted by PET, PP noncontinuous fibres and by superabsorbent fibres, the latter in a 70% mass content. This percentage can vary depending on the perspiration quantity needed to be absorbed.
- The formulation prepared on the previous step was applied by knife coating technique. The layer thickness of the formulation applied was controlled by the distance between the equipment knife and the paper used as production support.
- The nonwoven fabric was pressed over the still fluid PVC layer. The applied pressure (between 0.5 and 20 bar) determines the number of nonwoven fabric fibres at the PVC layer surface. Those surface fibres will allow the water passage / transport to the material reverse side, freeing its surface from user perspiration, since PVC itself does not absorb nor diffuse water. This parameter will influence diffusion rate and water quantity absorption, which is normally determined by the automotive producers for breathability.
- The structure was thus subsequently subject to a gelification process.

### Step 3: Lacquering process

In an embodiment, the structure formed in step 2 was lacquered by knife-coating and rotogravure process. This is an aqueous base lacquer and contains an ionic nature aliphatic polyurethane and is therefore capable of absorbing and diffusing water. The applied quantity was optimized in terms of diffusion rate and water absorption quantity needed.

### Step 4: Embossing process

Although not being essential for the moisture management phenomenon, but being an added value of PVC based artificial leather, the material produced in steps 1 to 3 can be embossed with varied textures, namely a natural leather imitation structure.

### Example 2 - Preparation of an artificial leather material with moisture management properties, increased by surface wear.

In an embodiment, the material produced considering the steps referred in example 1, with the application of an additional step between the 2^{nd} and 3^{rd} steps, where the nonwoven fabric and the PVC multilayer structure surface is worn by a grinding process. This step is aimed at exposing more nonwoven fibres to the surface. The higher or lower grinding will allow a higher or lower water diffusion rate through the material layers.

### Example 3 - Preparation of an artificial leather material with moisture management properties, increased by perforation of the multilayer structure.

In an embodiment, the material produced considering the steps referred in example 1, with the application of an additional step between the 2^{nd} and 3^{rd} steps, where the nonwoven fabric and the PVC multilayer structure is perforated by needling. The goal of the needling process is to create transport channels therefore exposing more fibres of nonwoven fabric to the surface and their contact with the diffusing and absorbent lacquer, creating continuous perspiration transport channels from the right face of the article to the reverse side.

### Example 4 - Preparation of an artificial leather material with moisture management and breathability properties, increased by perforation of the multilayer structure.

Material produced according to steps referred in Example 1, with application of an additional step between 3^{rd} and 4^{th} steps, where the multilayer structure of nonwoven fabric, PVC and lacquer is perforated by needling. The performed process aims to create transport channels exposing more nonwoven fabric fibres to the surface. The higher or lower perforation will allow a higher or lower water diffusion rate. The needling process in the material after the lacquering process allows the creation of pores open at the surface, thus ensuring the vapour water permeation by convection (breathability).

### Example 5 - Evaluation of the moisture management properties of the developed material

Two internal methods were developed for the assessment of the breathability and moisture management properties. A first method based on the standard ASTM E 96 - Standard test methods for water vapor transmission of materials, for determining the water vapour permeation and absorption capacity.

In the first developed method the test cups are filled in with a certain quantity of water, in order to guarantee that there is no contact between the test sample and the water. The samples to be tested, previously weighted, are placed on the top of the cups with the face facing the interior of the cup and are fixed by a sealing ring. For determining vapour water permeation and absorption capacity, i.e. breathability, the test cups were weighted before starting the assay.

The tested samples were the following:
- PVC Artificial leather material currently available on the market ("control")
- perforated PVC artificial leather material (sample 1)
- Alcântara® (Benchmarking)
- Material resulting from example 4.

For humidity and room temperature control, the cups were placed in a test chamber, where a fixed temperature is applied and said parameters are controlled. In the assay this example refers to, the test chamber was at 32 ± 1 °C and at a relative humidity of 55 ± 1 %.

The test was performed during 8 hours, and after this period the determination of the final weights was performed.

At the end of the assay, for each set (cup + sample), the final weight of the sample and the final weight of the test cup with water was determined.

The difference between the sample final weight and the corresponding initial weight translates the quantity of absorbed water by the tested sample. The absorption rate is then determined considering the assay realisation time.

The difference between the cup with water final weight and the corresponding initial weight translates the water quantity which has been permeated.

These quantities were correlated with the sample area and with the assay time, the obtained results being presented in table 1, absorption and breathability rate (WVTR - Water Vapour Transmission Rate).

For the assessment of the materials moisture management (closely connected to the liquid perspiration behaviour), a second method / test has been developed consisting of performance assessment regarding its absorption / diffusion ability of a specific quantity of liquid water.

According to method 2, materials were weighed before the start of the assay. The tested samples were the following:
- PVC artificial leather material currently available on the market ("control")
- perforated PVC artificial leather material (sample 1)
- Alcântara® (Benchmarking)
- Material resulting from example 4.

For recording humidity and room temperature conditions, the samples were placed in a room with controlled temperature at 23 ± 1 °C and room relative humidity was continuously measured between 45 and 50%.

The assay was performed for 2 hours and after that period the final weight was determined.

At the end of the assay, the water excess was removed from surface with the aid of an absorbent paper and for each material the final weight of the sample was determined.

The difference between the final weight of the sample and the corresponding initial weight translates the water quantity absorbed by the tested sample. This quantity was related with the assay time, the achieved results being presented in Table 1 (moisture management).

**Table 1 - Values of the water absorption and water vapourtransmission obtained for the developed material, for the control sample and for the benchmarking samples**

| Material | Breathability - WVTR (mg·cm⁻²·h⁻¹) (method 1) | Absorption rate (mg·cm⁻²·h⁻¹) (method 1) | Moisture management (mg·cm⁻²·h⁻¹) (method 2) |
|---|---|---|---|
| Control (PVC) | 0 | 0 | 0 |
| Alcantara® | 3.0 | 0.02 | 2.6 |
| Sample 1 | 0.5 | 0.26 | 6.2 |
| Material resulting from example 4 | 0.8 | 0.30 | 6.8 |

From the comparison of the obtained results for the tested samples, it was found that the described combination in example 4 translates into a significant improvement with regards to a common artificial leather article (control).

It is demonstrated that the material described in the present disclosure presents a higher moisture management, while maintaining resistance and aging conditions of the material required by the automotive industry.

The values obtained for the developed material (example 4) indicate that the tested water was mainly absorbed in the sample. This result is particularly interesting for an automotive seats application, since the humidity removed from the surface of the seat is able to be absorbed in an artificial leather interior layer, preventing humidity accumulation on the seat structuring foam, and being able to be released after the contact between the user (perspiration source) and the seat surface is over: inversion of the water concentration gradient.

The disclosure is of course not in any way restricted to the embodiments described and a person with ordinary skill in the art will foresee many possibilities to modifications thereof and to substitutions of technical characteristics by other equivalent ones, depending on each situation, as defined in the appended claims.

The disclosed embodiments are combinable. The following claims set out particular embodiments of the disclosure.

## Claims

1. Layered flexible material for coatings comprising:
at least a water permeable lacquer external layer (1), comprising polymers comprising one of the following functional groups: hydroxyl, amine, carboxylic, carbonyl, ester, sulfonic, amide, acrylate or combinations thereof;
a polyvinyl chloride - PVC - perforated intermediate layer (2);
an absorbent and diffusing textile layer (3) comprising a plurality of superabsorbent polymer fibres and a plurality of polyester fibres;
wherein said layers are bound.

2. Material according to claim 1 wherein the absorbent textile layer (3) further comprises a plurality of polypropylene fibres.

3. Material according to the previous claims wherein the polymers of the lacquer external layer (1) are: ionic.

4. Material according to the previous claims wherein the polymers of the lacquer external layer (1) are aliphatic or aromatic.

5. Material according to the previous claims wherein the absorbent textile layer (3) comprises:
15 - 80% w/w of polyester fibres, preferably 30 - 70% w/w;
20 - 85% w/w of superabsorbent fibres, preferably 30 - 70% w/w.

6. Material according to the previous claims wherein the absorbent textile layer (3) comprises:
10 - 40% w/w of polyester fibres, preferably 10 - 30% w/w;
20 - 85% w/w of superabsorbent fibres, preferably 30 - 70% w/w;
5 - 40% w/w of polypropylene fibres, preferably 5 -10 % w/w of polypropylene fibres.

7. Material according to the previous claims further comprising at least one additional support layer (4) bound to the absorbent textile layer (3).

8. Material according to the previous claims wherein the perforation of the PVC intermediate layer (2) is: from the lacquer external layer (1) towards the absorbent layer (3); or from the absorbent layer (3) towards the lacquer external layer (1); or combinations thereof.

9. Material according to the previous claims wherein the holes distribution varies between 2 holes/cm² - 100 holes/cm², preferably between 10-60 holes/cm², and more preferably 20-30 holes/cm².

10. Material according to the previous claims wherein the holes size varies between 10 nm -1 mm.

11. Material according to the previous claims wherein the absorbent textile layer (3) further comprises fibres selected from the following list: polyethylene, polyamide, PLA, PHA, PHB, cotton, wool, silk, viscose, regenerated cellulose, or combinations thereof.

12. Material according to the previous claims wherein the superabsorbent fibres of the absorbent textile layer (3) are selected from a list constituted by: polyacrylic acid, polyacrylamide and polyvinyl alcohol (PVA), polyacrylate/polyacrylonitrile copolymers, polyacrylamide and/or ethylene maleic anhydride, crosslinked carboxymethylcellulose, crosslinked hydroxyethylcellulose, PVA copolymers, crosslinked polyethylene oxide, crosslinked or graft starch, polyacrylonitrile copolymers.

13. Material according to the previous claims wherein the PVC intermediate layer (2) comprises a plurality of sublayers, in particular 2, 3, 4.

14. Upholsteries, in particular car upholsteries, comprising the material described in any of the previous claims.

15. Method for the material preparation described in the previous claims comprising the following steps:
forming a PVC layer over a paper support by knife-coating;
applying an absorbent fabric layer described in the previous claims, over the fluid PVC layer;
gelling the PVC layer;
lacquering the material obtained in the previous step with at least one permeable lacquer layer according to that described in the previous claims;
perforating the material in order to allow permeabilizing the PVC layer.

## Patentansprüche

1. Flexibles Schichtmaterial für Beschichtungen umfassend:
mindestens eine wasserdurchlässige äußere Lackschicht (1), umfassend Polymere, die eine der folgenden Funktionsgruppen umfassen: Hydroxyl, Amin, Carboxyl, Carbonyl, Ester, Sulfon, Amid, Acrylat oder Kombinationen davon;
eine perforierte Zwischenschicht (2) aus Polyvinylchlorid - PVC;
eine absorbierende und diffundierende Textilschicht (3), die eine Vielzahl superabsorbierender Polymerfasern und eine Vielzahl von Polyesterfasern umfasst;
wobei die genannten Schichten gebunden sind.

2. Material nach Anspruch 1, wobei die absorbierende Textilschicht (3) ferner eine Vielzahl von Polypropylenfasern umfasst.

3. Material nach den vorangehenden Ansprüchen, wobei die Polymere der äußeren Lackschicht (1) sind: ionisch.

4. Material nach den vorangehenden Ansprüchen, wobei die Polymere der äußeren Lackschicht (1) aliphatisch oder aromatisch sind.

5. Material nach den vorangehenden Ansprüchen, wobei die absorbierende Textilschicht (3) umfasst:
15 - 80 % w/w an Polyesterfasern, vorzugsweise 30 - 70 % w/w;
20 - 85 % w/w an superabsorbierenden Fasern, vorzugsweise 30 - 70 % w/w.

6. Material nach den vorangehenden Ansprüchen, wobei die absorbierende Textilschicht (3) umfasst:
10 - 40 % w/w an Polyesterfasern, vorzugsweise 10 - 30% w/w;
20 - 85 % w/w an superabsorbierenden Fasern, vorzugsweise 30 - 70 % w/w;
5 - 40 % w/w an Polypropylenfasern, vorzugsweise 5 - 10 % w/w an Polypropylenfasern.

7. Material nach den vorangehenden Ansprüchen ferner mindestens eine zusätzliche Trägerschicht (4) umfassend, die an die absorbierende Textilschicht (3) gebunden ist.

8. Material nach den vorangehenden Ansprüchen, wobei die Perforation der PVC-Zwischenschicht (2) wie folgt verläuft: von der äußeren Lackschicht (1) zur absorbierenden Schicht (3); oder von der absorbierenden Schicht (3) zur äußeren Lackschicht (1); oder Kombinationen davon.

9. Material nach den vorangehenden Ansprüchen, wobei die Lochverteilung zwischen 2 Löchern/cm² - 100 Löchern/cm², vorzugsweise zwischen 10-60 Löchern/cm² und besonders bevorzugt zwischen 20-30 Löchern/cm² variiert.

10. Material nach den vorangehenden Ansprüchen, wobei die Lochgröße zwischen 10 nm -1 mm variiert.

11. Material nach den vorangehenden Ansprüchen, wobei die absorbierende Textilschicht (3) ferner Fasern umfasst, die aus folgender Liste ausgewählt sind: Polyethylen, Polyamid, PLA, PHA, PHB, Baumwolle, Wolle, Seide, Viskose, regenerierte Zellulose oder Kombinationen davon.

12. Material nach den vorangehenden Ansprüchen, wobei die superabsorbierenden Fasern der absorbierenden Textilschicht (3) aus einer Liste ausgewählt sind, die besteht aus: Polyacrylsäure, Polyacrylamid und Polyvinylalkohol (PVA), Polyacrylat / Polyacrylnitril-Copolymeren, Polyacrylamid und/oder Ethylen-Maleinsäureanhydrid, vernetzten Carboxymethylcellulose, vernetzte Hydroxyethylcellulose, PVA-Copolymere, vernetztem Polyethylenoxid, vernetzter oder aufgepfropfter Stärke, Polyacrylnitril-Copolymere.

13. Material nach den vorangehenden Ansprüchen, wobei die PVC Zwischenschicht (2) eine Mehrzahl von Teilschichten umfasst, namentlich 2, 3, 4.

14. Polsterungen, insbesondere Autopolsterungen, die das in einem der vorangehenden Ansprüche beschriebene Material umfassen.

15. Verfahren zur Aufbereitung des Materials, das in den vorangehenden Ansprüchen beschrieben wurde und folgende Schritte umfasst:
Ausbilden einer PVC-Schicht auf einem Papierträger im Rakelstreichverfahren;
Aufbringen einer wie in den vorangehenden Ansprüchen beschriebenen absorbierenden Gewebeschicht auf die flüssige PVC-Schicht;
Gelieren der PVC-Schicht;
Lackieren des im vorangehenden Schritt erhaltenen Materials mit mindestens einer der in den vorhergehenden Ansprüchen beschriebenen durchlässigen Lackschicht;
Perforieren des Materials, um eine Durchlässigkeit der PVC-Schicht zu erreichen.

## Revendications

1. Matériau flexible en couches pour revêtements comprenant:
au moins une couche externe de laque perméable à l'eau (1), comprenant des polymères intégrant l'un des groupes fonctionnels suivants : hydroxyle, amine, carboxylique, carbonyle, ester, sulfonique, amide, acrylate ou combinaisons de ceux-ci ;
une couche intermédiaire de chlorure de polyvinyle - PVC - perforé (2) ;
une couche textile absorbante et diffusante (3) comprenant une pluralité de fibres polymères super-absorbantes et une pluralité de fibres de polyester ;
dans lequel lesdites couches sont liées.

2. Matériau selon la revendication 1, dans lequel la couche textile absorbante (3) comprend également une pluralité de fibres de polypropylène.

3. Matériau selon les revendications antérieures, dans lequel les polymères de la couche externe de laque (1) sont : ioniques.

4. Matériau selon les revendications antérieures, dans lequel les polymères de la couche externe de laque (1) sont aliphatiques ou aromatiques.

5. Matériau selon les revendications antérieures, dans lequel la couche textile absorbante (3) comprend :
15-80% p/p de fibres de polyester, de préférence 30-70% p/p ;
20-85% p/p de fibres super-absorbantes, de préférence 30-70% p/p.

6. Matériau selon les revendications antérieures, dans lequel la couche textile absorbante (3) comprend :
10-40% p/p de fibres de polyester, de préférence 10-30% p/p ;
20-85% p/p de fibres super-absorbantes, de préférence 30-70% p/p ;
5-40% p/p de fibres de polypropylène, de préférence 5-10% p/p de fibres de polypropylène.

7. Matériau selon les revendications antérieures comprenant également au moins une couche de support supplémentaire (4) liée à la couche textile absorbante (3).

8. Matériau selon les revendications antérieures, dans lequel la perforation de la couche intermédiaire de PVC (2) est faite: de la couche externe de laque (1) vers la couche absorbante (3) ; ou de la couche absorbante (3) vers la couche externe de laque (1) ; ou combinaisons de ceux-ci.

9. Matériau selon les revendications antérieures, dans lequel la distribution des trous varie entre 2 trous/cm² - 100 trous/cm², de préférence entre 10-60 trous/cm², plus préférablement 20-30 trous/cm².

10. Matériau selon les revendications antérieures, dans lequel la taille des trous varie entre 10 nm - 1 mm.

11. Matériau selon les revendications antérieures, dans lequel la couche textile absorbante (3) comprend également des fibres sélectionnées à partir de la liste suivante : polyéthylène, polyamide, PLA, PHA, PHB, coton, laine, soie, viscose, cellulose régénérée, ou combinaisons de ceux-ci.

12. Matériau selon les revendications antérieures, dans lequel les fibres super-absorbantes de la couche textile absorbante (3) sont sélectionnées à partir d'une liste consituée de : acide polyacrylique, alcool polyacrylamide et polyvinylique (PVA), copolymères polyacrylates/polyacrylonitriles, anhydride maléique polyacrylamide et/ou éthylène, carboxyméthylcellulose réticulée, hydroxyéthylcellulose réticulée, copolymères PVA, oxyde de polyéthylène réticulé, amidon réticulé ou greffé, copolymères polyacrylonitriles.

13. Matériau selon les revendications antérieures, dans lequel la couche intermédiaire de PVC (2) comprend une pluralité de sous-couches, tout particulièrement 2, 3, 4.

14. Rembourrage, tout particulièrement rembourrage de voiture, comprenant le matériau décrit dans l'une quelconque des revendications antérieures.

15. Méthode pour la préparation du matériau décrit dans les revendications antérieures comprenant les étapes suivantes :
former une couche de PVC sur un support en papier par raclage ;
appliquer une couche de tissu absorbant décrit dans les revendications antérieures sur la couche de PVC fluide ;
gélifier la couche de PVC ;
laquer le matériau obtenu lors de l'étape précédente avec au moins une couche de laque perméable conformément à ce qui a été décrit dans les revendications antérieures ;
perforer le matériau afin de perméabiliser la couche de PVC.
